# EUROPÄISCHE PATENTSCHRIFT

(11) **EP 2 048 486 B1**
(45) Veröffentlichungstag und Bekanntmachung des Hinweises auf die Patenterteilung: **30.05.2012**
(21) Anmeldenummer: 08017726.4
(22) Anmeldetag: 09.10.2008
(51) Int. Cl.: G01M 17/007

(54) **Rollenprüfstand für Kraftfahrzeuge**
Roller test bench for vehicles
Banc d'essai à rouleaux pour véhicules automobiles

(30) Priorität: 09.10.2007 DE 102007048315
(43) Veröffentlichungstag der Anmeldung: 15.04.2009
(73) Patentinhaber: MAHA-AIP GmbH & Co. KG, 87490 Haldenwang (DE)
(72) Erfinder: Heinz, Manfred, 88299 Leutkirch (DE); Becherer, Thomas, 87463 Dietmannsried (DE); Knestel, Anton, 87496 Hopferbach (DE)
(74) Vertreter: MERH-IP Matias Erny Reichl Hoffmann

(56) Entgegenhaltungen:
- JP-A- 2006 105 899
- US-A- 4 346 782

## Beschreibung

Die Erfindung betrifft einen Rollenprüfstand für Kraftfahrzeuge, der entsprechend angeordnete Isolierschichten aufweist, um die Geräuschemissionen beim Prüfen eines Kraftfahrzeugs zu minimieren.

Rollenprüfstände finden allgemein in der Kraftfahrzeugtechnik ein weites Anwendungsfeld. So sind beispielsweise spezielle Prüfstände zum Ermitteln der Motorleistung auf dem Markt. Ebenso sind Rollenprüfstände für die Abgasmessung und für ABS-Systeme im Einsatz.

Bei allen Prüfständen wird das Verhalten des Prüfstands speziell auf einen bestimmten Einsatzzweck abgestimmt. So muss beispielsweise ein Abgasprüfstand nicht unbedingt sehr hohe Leistungen absorbieren. Bei einem Leistungsprüfstand hingegen wird eine hohe Leistung gefordert. Das einheitliche Merkmal dieser Prüfstände ist, dass sich zumindest ein Fahrzeugrad auf einer Prüfstandsrolle dreht, wodurch das Fahren auf einer Fahrbahn simuliert wird.

Während einer Fahrzeugentwicklung muss zudem beispielsweise die Geräuschemission im Innen- sowie Außenraum bei Konstantfahrt und beschleunigter Fahrt simuliert werden. Weiterhin sind Simulationen für unterschiedliche Straßenbeläge erforderlich. Diese Untersuchungen werden teilweise im Freifeld auf Versuchsstrecken, aber auch mehr und mehr auf Rollenprüfständen durchgeführt. Die Durchführung der Messung auf Rollenprüfständen hat den Vorteil, dass das Fahrzeug steht und sich quasi die Fahrbahn bewegt, wodurch die Anbringung der Messmittel am Fahrzeug wesentlich erleichtert wird. Dieser Vorteil bringt jedoch den Nachteil mit sich, dass in diesem Fall neben den Fahrzeug- auch die Prüfstandsgeräusche emittiert werden.

Die Anforderungen an derartige NVH (Noise Vibration Harshness)-Prüfstände sind sehr hoch. Beispielsweise kann gefordert werden, dass bei einer simulierten Fahrgeschwindigkeit von 50 km/h das von dem Prüfstand verursachte Geräusch maximal 40 dB sein darf. Diese Fahrgeräuschprüfstände werden beispielsweise in Absorberhallen angeordnet.

Die JP 2006 105899 A bescheibt einen Rollenprüfstand, wobei auf der Außenseite eines Rollenmantels einer Rolle eine geräuscharme Schicht und auf der Innenseite des Rollenmantels eine geräuschabsorhierende Schicht aufgebracht ist.

Es ist eine Aufgabe der Erfindung, einen Rollenprüfstand und eine Prüfstandsrolle für einen Rollenprüfstand zu schaffen, die nur geringe Geräuschemissionen verursachen.

Diese Aufgabe wird gemäß den Merkmalen der unabhängigen Patentansprüche gelöst. Die abhängigen Patentansprüche betreffen vorteilhafte Ausführungsformen der Erfindung.

Ein Rollenprüfstand für Kraftfahrzeuge kann zumindest eine Prüfstandsrolle aufweisen. Die Prüfstandsrolle kann zumindest einen Rollenboden und einen Rollenmantel aufweisen. Der Rollenboden kann den Rollenmantel tragen, wobei der Rollenmantel eine Mantelaußenfläche und eine Mantelinnenfläche aufweisen kann. Die Mantelaußenfläche kann mit einem Fahrzeugrad in Kontakt treten. Es kann weiterhin eine Isolierschicht zur Schall- und/oder Schwingungsdämpfung an dem Rollenboden vorgesehen sein.

Es können ein oder bevorzugt zwei Rollenböden vorgesehen sein. In dem Fall, dass nur ein Rollenboden vorgesehen ist, muss dieser entsprechend stärker ausgebildet sein um den Rollenmantel zu tragen.

Durch das Vorsehen einer Isolierschicht kann die Geräuschemission des Prüfstands stark vermindert werden. Insbesondere können durch die Isolierung die Geräuschemissionen stark vermindert werden, die durch das Abrollen des bzw. der Fahrzeugräder auf der bzw. den Prüfstandsrollen erzeugt werden.

In diesem Zusammenhang ist festzuhalten, dass die Oberfläche der Prüfstandsrollen glatt oder rau (bspw. flammgespritzt) sein kann. Es ist jedoch auch denkbar, dass auf der Rollenoberfläche (Mantelaußenfläche) Schlagleisten, Kacheln oder andere Beläge vorgesehen sind, die bspw. einem Kopfsteinpflaster oder anderen Fahrbahnbelägen ähneln. Die abrollenden Fahrzeugräder und ebenso die prüfstandseitige Lagerung können den Prüfstand und speziell auch die Prüfstandsrollen zum Schwingen anregen. Jedes Fahrzeug "trampelt" auf der Prüfstandsrolle und erzeugt unterschiedliche Anregungsfrequenzen. Beim Auftreten von jeweiligen Resonanzen wird dieser Körperschall verstärkt und über eine akzeptable Grenze gehoben.

Durch das erfindungsgemäße Vorsehen der Isolierschicht bzw. der Isolierschichten an den jeweiligen Außenseiten der Rollenböden kann die Geräuschemission ausreichend gedämpft werden. Die Isolierschicht kann aus einem zähelastischen Material gebildet sein, welches die durch die schwingenden Maschinenelemente erzeugte Schwingungsenergie in Wärme umsetzen kann und dadurch den Schwingungsvorgang bedämpft. Weiterhin ist festzustellen, dass Rollenkörper rollenspezifische Resonanzfrequenzen je nach Bauart der Prüfstandsrolle aufweisen. So ist beispielsweise der Rollenmantel durch seine gebogene Struktur ein relativ steifes Element, was zu höheren Resonanzfrequenzen führt. Der zumindest eine Rollenboden (Seitenwände) ist hingegen ein sehr großflächiges Element und hat dadurch eine niedrigere Resonanzfrequenz bzw. -frequenzen. Diese Rollenkörper werden nun durch prüfstandseitige Schwingungen angeregt und/oder durch das abrollende Fahrzeugrad. In Resonanzbereichen werden diese Schwingungen entsprechend verstärkt und damit wird eine relativ große Luftabstrahlleistung erzeugt. Durch das Aufbringen der Isolierschichten außen auf die Rollenböden können diese Geräuschemissionen stark vermindert werden.

Ein Beispiel für das zähelastische Material ist etwa ein Gemisch von polymeren Pulvern auf PVC-Basis, Weichmachern, Additiven und Füllstoffen. Dieses Gemisch kann dann nochmals durch Erwärmung gehärtet werden. Derartige Materialien finden bspw. für den Unterbodenschutz von Fahrzeugen Verwendung.

Zusätzlich zur ersten Isolierschicht, die an den jeweiligen Außenseiten der Rollenböden angeordnet ist oder alternativ dazu, kann eine zweite Isolierschicht vorgesehen sein, die an der Mantelinnenfläche des Rollenmantels vorgesehen ist. Durch das Vorsehen dieser zweiten Isolierschicht können die Geräuschemissionen weiter vermindert werden.

Die ersten Isolierschichten und die zweite Isolierschicht sind fest und direkt anliegend mit den jeweiligen Trägerwänden (Rollenboden bzw. Rollenmantel) verbunden. Dadurch kann die Bedämpfung der jeweilig schwingenden Trägerwände optimiert werden.

Es ist weiterhin möglich, einen oder mehrere Gegenschwinger vorzusehen. Diese Gegenschwinger können eine quasi doppelwandige Ausführung der Trägerwände vorsehen. Beispielsweise kann ein Gegenschwinger an der Außenseite der Isolierschicht vorgesehen sein, die an einem Rollenboden angeordnet ist. Dasselbe gilt für den auf der anderen Seite vorgesehenen Rollenboden.

Zusätzlich, sofern an der Mantelinnenfläche des Rollenmantels eine Isolierschicht vorgesehen ist, kann auch an der Innenseite der Isolierschicht, die an der Mantelinnenfläche vorgesehen ist, ein entsprechender Gegenschwinger vorgesehen sein.

Zur Optimierung der Verminderung der Geräuschemissionen können diese Gegenschwinger zumindest 25% der Masse der jeweiligen Trägerwand aufweisen. Im Fall, dass der Rollenboden beispielsweise mit einem 10 mm starken Material gebildet ist, kann der Gegenschwinger zumindest eine Wandstärke von 2,5 mm aufweisen. Dies gilt unter der Voraussetzung, dass sowohl die Trägerwand (Rollenboden) als auch der Gegenschwinger aus dem gleichen Material gebildet sind.

Durch die vorgenannte doppelwandige Ausführung der Rollenböden und, sofern derart ausgeführt, des Rollenmantels ist das zähelastische Material (die Isolierschicht) zwischen zwei Wandungen angeordnet, wobei das zäh-elastische Material die Schwingungsarbeit aufnimmt und in Wärme umwandelt (bedämpft), wobei ein weiteres Abstrahlen der Schwingungen durch den jeweilig vorgesehenen Gegenschwinger weiter vermindert wird. Durch das Vorsehen der Gegenschwinger wie vorstehend erläutert kann folglich die Geräuschemission noch weiter vermindert werden.

An dieser Stelle sei ausdrücklich erwähnt, dass die Isolierschicht an der Außenseite und/oder der Innenseite der Rollenböden angeordnet werden kann. Diese Isolierschichten können dann jeweils zusätzlich mit entsprechenden Gegenschwingern versehen sein. Diese Gegenschwinger sind dann jeweils derart angeordnet, dass ein entsprechendes Sandwich gebildet wird, welches das Isoliermaterial dazwischen aufnimmt.

Zudem ist es auch möglich, dass das Isoliermaterial sowohl außen als auch innen am Rollenmantel vorgesehen ist. Das an dem Rollenmantel vorgesehene Isoliermaterial (außen und/oder innen) kann jeweils mit entsprechenden Gegenschwingern versehen werden, so dass diese Gegenschwinger, wie auch bei den Rollenböden, die Isolierschicht in eine Art Sandwich einschließen, wobei die Isolierschicht dann zwischen dem Gegenschwinger und dem Rollenmantel angeordnet ist.

Die jeweiligen Gegenschwinger können mit entsprechenden Schraubverbindungen mit dem Rollenboden bzw. den Rollenböden und/ oder dem Rollenmantel verbunden sein.

Die Rollenböden können weiterhin mit Service-Deckeln versehen sein. Das zu den Rollenböden vorstehend Erläuterte gilt ebenso für die Service-Deckel, wobei eine entsprechende Isolierung des Service-Deckels erfolgt.

Zusammenfassend kann die Erfindung eine außerordentlich wirksame und effektive Geräuschemissionsverminderung durch das Vorsehen von entsprechenden Isolierschichten erzielen. Durch den zusätzlichen Einsatz von Gegenschwingern, die die Isolierschichten in eine Art Sandwich einschließen, kann das Geräuschemissionsverhalten weiter verbessert werden.

Im Folgenden werden Ausführungsbeispiele der Erfindung anhand von schematischen Figuren näher erläutert. Es zeigen:
- Fig. 1: eine Draufsicht auf einen Prüfstand für Kraftfahrzeuge,
- Fig. 2: eine Seitenansicht einer Prüfstandsrolle mit darauf angeordnetem Fahrzeugrad und eine Ausschnittsvergrößerung A der Prüfstandsrolle in einer teilweisen Schnittdarstellung, und
- Fig. 3: eine Seitenansicht einer Prüfstandsrolle mit darauf angeordnetem Fahrzeugrad und eine Ausschnittsvergrößerung B der Prüfstandsrolle mit Gegenschwingern in einer teilweisen Schnittdarstellung.

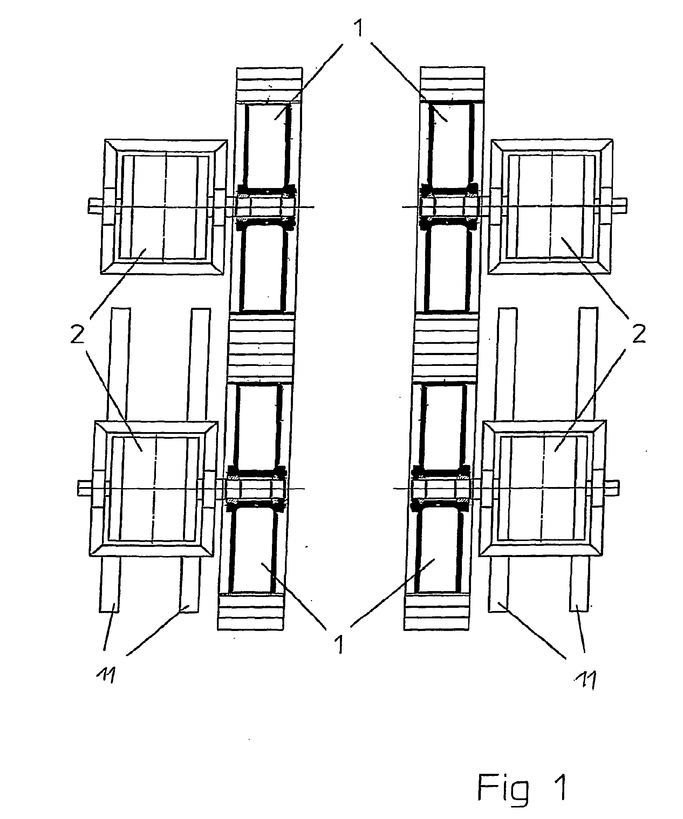

Die Fig. 1 zeigt einen Rollenprüfstand mit vier Prüfstandsrollen 1. Die Prüfstandsrollen 1 werden von entsprechenden Antriebsmaschinen 2 angetrieben bzw. gebremst. Die Lagerstellen der Antriebsmaschinen 2 sind entweder mit laufruhigen Rollenlagern oder mit hydrodynamischen bzw. hydrostatischen Lagern ausgeführt. Zwei der Antriebsmaschinen 2 sind auf Führungselementen 11 in Fahrtrichtung verschiebbar angebracht, damit der Prüfstand auf unterschiedliche Radstände der zu prüfenden Kraftfahrzeuge eingestellt werden kann.

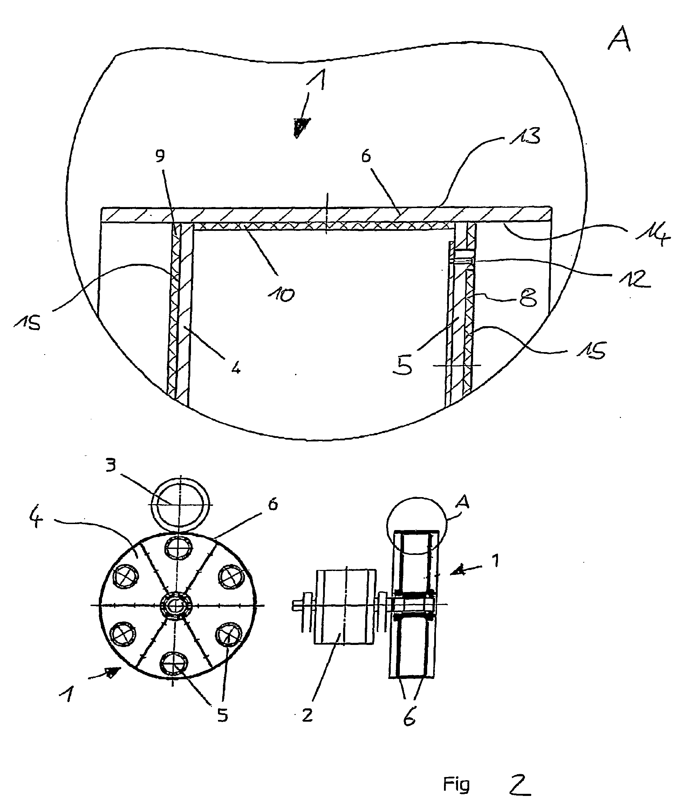

Die Fig. 2 zeigt unten links eine schematische Seitenansicht einer Prüfstandsrolle 1 mit einem schematisch dargestellten Fahrzeugrad 3, das auf einem Rollenmantel 6 der Prüfstandsrolle 1 abrollt. Weiterhin ist in dieser Seitenansicht ein Rollenboden 4 dargestellt, der Service-Deckel 5 aufweist. In der Fig. 2 ist unten rechts eine weitere Draufsicht der Prüfstandsrolle 1 dargestellt. Die Prüfstandsrolle 1 ist über eine entsprechende Antriebswelle mit der Antriebsmaschine 2 verbunden. Ein Abschnitt der Prüfstandsrolle ist in einer vergrößerten Darstellung A im oberen Teil der Fig. 2 genauer dargestellt. Die Prüfstandsrolle 1 weist den Rollenmantel 6 auf, der eine Mantelaußenfläche 13 aufweist. Auf dieser Mantelaußenfläche 13 rollt üblicherweise das Fahrzeugrad 3 ab. Wie vorangehend schon erläutert, kann auf dieser Mantelaußenfläche 13 zusätzlich noch ein entsprechendes Material vorgesehen sein, um bestimmte Straßenoberflächen zu simulieren.

Der Rollenmantel 6 ist mit Rollenböden 4 verbunden, die den Rollenmantel 6 tragen. Die Rollenböden 4 weisen auf jeweiligen Außenseiten 15 jeweils eine Isolierschicht 8, 9 auf. Diese Isolierschicht 8, 9 ist fest und direkt anliegend mit dem jeweiligen Rollenboden 4 verbunden. In der vergrößerten Darstellung A ist zusätzlich ein Service-Deckel 5 dargestellt, der über eine Schraube 12 mit dem Rollenboden 4 verbindbar ist. Zusätzlich zum Vorsehen der Isolierschicht 8, 9 an der Außenseite 15 des Rollenbodens 4 kann die Isolierschicht 8 auch an der Außenseite des Service-Deckels 5 vorgesehen sein. Dies erlaubt eine Geräuschemissionsreduzierung über die Gesamtfläche des Rollenbodens 4.

An einer Mantelinnenfläche 14 kann zusätzlich eine weitere Isolierschicht 10 vorgesehen sein, um die Geräuschemissionen weiter zu vermindern.

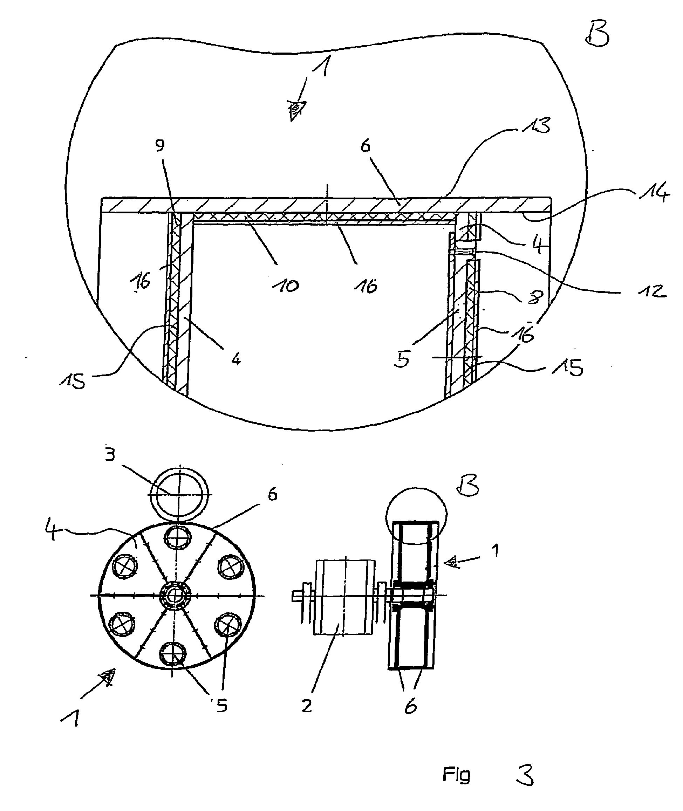

Die Fig. 3 zeigt im Unterschied zur Fig. 2 das Vorsehen von entsprechenden Gegenschwingern 16.

Es können jeweilige Gegenschwinger 16 außen an der Isolierschicht 8, 9 angeordnet werden. Die Isolierschicht 8, 9 befindet sich damit zwischen der jeweiligen Außenseite 15 des jeweiligen Rollenbodens 4 und dem entsprechend vorgesehenen Gegenschwinger 16. Das Isoliermaterial bzw. die Isolierschicht 8, 9 befindet sich dadurch in einer sandwich-artigen Anordnung zwischen dem Rollenboden 4 und dem Gegenschwinger 16. Dadurch kann die Geräuschemission weiter vermindert werden.

Darüber hinaus ist es zudem möglich, einen Gegenschwinger 16 an der Mantelinnenfläche 14 vorzusehen, wobei zwischen dem Gegenschwinger 16 und der Mantelinnenfläche 14 die Isolierschicht 10 vorgesehen ist.

Die jeweilig vorgesehenen Gegenschwinger 16 können mittels entsprechenden Verschraubungen mit der jeweiligen Trägerwand verbunden sein.

Die vorstehenden Ausführungsformen und Merkmale können in beliebiger Weise miteinander kombiniert werden.

## Patentansprüche

1. Rollenprüfstand für Kraftfahrzeuge, mit
- zumindest einer Prüfstandsrolle (1), die zumindest einen Rollenboden (4) und einen Rollenmantel (6) aufweist, wobei der Rollenboden (4) den Rollenmantel (6) trägt, der Rollenmantel (6) eine Mantelaußenfläche (13) und eine Mantelinnenfläche (14) aufweist und die Mantelaußenfläche (13) für ein in Kontakt treten mit einem Fahrzeugrad (3) ausgebildet ist, und
- einer ersten Isolierschicht (8, 9) zur Schall- und/oder Schwingungsdämpfung, die an zumindest einem Rollenboden (4) angeordnet ist,
**dadurch gekennzeichnet, dass**
ein Gegenschwinger (16) auf der ersten Isolierschicht (8, 9) angeordnet ist und der Gegenschwinger (16) mit dem
Rollenboden (4) und dem dazwischen angeordneten Isoliermaterial (8, 9, 10) ein Sandwich bildet, wobei der Gegenschwinger (16) fest und direkt anliegend mit dem Isoliermaterial (8, 9, 10) in Verbindung steht.

2. Rollenprüfstand nach Anspruch 1, **dadurch gekennzeichnet, dass** die erste Isolierschicht (8, 9) an der jeweiligen Außenseite (15) des Rollenbodens (4) angeordnet ist.

3. Rollenprüfstand nach Anspruch 1 oder 2, **dadurch gekennzeichnet, dass** die Isolierschicht (8, 9) fest und direkt anliegend mit der Außenseite (15) des Rollenbodens (4) verbunden ist.

4. Rollenprüfstand nach zumindest einem der Ansprüche 1 bis 3, **dadurch gekennzeichnet, dass** zwei Rollenböden (4) vorgesehen sind.

5. Rollenprüfstand nach zumindest einem der Ansprüche 1 bis 4, **dadurch gekennzeichnet, dass** eine zweite Isolierschicht (10) zur Schall- und Schwingungsdämpfung an der Mantellnnenfläche (14) des Rollenmantels (6) vorgesehen ist.

6. Rollenprüfstand nach Anspruch 5, **dadurch gekennzeichnet, dass** die zweite Isolierschicht (10) fest und direkt anliegend mit der Mantelinnenfläche (14) des Rollenmantels (6) verbunden ist.

7. Rollenprüfstand nach zumindest einem der Ansprüche 1 bis 6, **dadurch gekennzeichnet, dass** ein Gegenschwinger (16) auf der zweiten Isolierschicht (10) angeordnet ist.

8. Rollenprüfstand nach zumindest einem der Ansprüche 1 bis 7, **dadurch gekennzeichnet, dass** der Gegenschwinger (16) mit dem Rollenboden (4) und/oder dem Rollenmantel (6) verschraubt ist.

9. Rollenprüfstand nach zumindest einem der Ansprüche 7 bis 8, **dadurch gekennzeichnet, dass** der Gegenschwinger (16) zumindest 25% der Masse der jeweiligen Trägerwand aufweist.

10. Rollenprüfstand nach zumindest einem der Ansprüche 1 bis 9, wobei die Rollenböden (4) Tragstege aufweisen.

11. Prüfstandrolle des Rollenprüfstandes nach zumindest einem der Ansprüche 1 bis 10.

## Claims

1. A roller test bench for vehicles, comprising
- at least one test bench roller (1) having at least one roller bottom (4) and a roller sleeve (6), the roller bottom (4) supporting the roller sleeve (6), the roller sleeve (6) having a sleeve outer surface (13) and a sleeve inner surface (14) and the sleeve outer surface (13) being formed for contacting a vehicle wheel (3), and
- at least one first insulating layer (8, 9) for sound or vibration dampening, which is disposed on at least one roller bottom (4),
**characterized in that**
a counter-oscillator (16) is disposed on the first insulating layer (8, 9) and the counter-oscillator (16) forms a sandwich with the roller bottom (4) and the insulating material (8, 9, 10) disposed therebetween, the counter-oscillator (16) being in communication with the insulating material (8, 9, 10) in a fixed and directly adjacent manner.

2. The roller test bench according to claim 1, **characterized in that** the first insulating layer (8, 9) is disposed on the respective outer surface (15) of the roller bottom (4).

3. The roller test bench according to claim 1 or 2, **characterized in that** the insulating layer (8, 9) is connected to the outer surface (15) of the roller bottom (4) in a fixed and directly adjacent manner.

4. The roller test bench according to at least one of claims 1 to 3, **characterized in that** two roller bottoms (4) are provided.

5. The roller test bench according to at least one of claims 1 to 4, **characterized in that** a second insulating layer (10) for sound and vibration dampening is provided on the sleeve inner surface (14) of the roller sleeve (6).

6. The roller test bench according to claim 5, **characterized in that** the second insulating layer (10) is connected to the sleeve inner surface (14) of the roller sleeve (6) In a fixed and directly adjacent manner.

7. The roller test bench accordingto at least one of claims 1 to 6, **characterized in that** a counter-oscillator (16) is disposed on the second insulating layer (10).

8. The roller test bench according to at least one of claims 1 to 7, **characterized in that** the counter-oscillator (16) is screwed to the roller bottom (4) and/or the roller sleeve (6).

9. The roller test bench according to at least one of claims 7 to 8, **characterized in that** the counter-oscillator (16) has at least 25% of the mass of the respective support wall.

10. The roller test bench according to at least one of claims 1 to 9, wherein the roller bottoms (6) have support bars.

11. A test bench roller of the roller test bench according to at least one of claims 1 to 10.

## Revendications

1. Banc d'essai à rouleaux pour véhicules automobiles, comportant
- au moins un rouleau (1) de banc d'essai qui comprend au moins un corps de rouleau (4) et une jupe de rouleau (6), le corps de rouleau (4) portant la jupe de rouleau (6), la jupe de rouleau (6) présentant une surface de jupe extérieure (13) et une surface de jupe intérieure (14), et la surface de jupe extérieure (13) étant réalisée pour venir en contact avec une roue de véhicule (3), et
- une première couche isolante (8, 9) destinée à l'amortissement du son et/ou des vibrations et disposée sur au moins un corps de rouleau (4),
**caractérisé en ce que**
un contre-oscillateur (16) est agencé sur la première couche isolante (8, 9), et le contre-oscillateur (16) forme un sandwich conjointement avec le corps de rouleau (4) et le matériau isolant (8, 9, 10) interposé, le contre-oscillateur (16) étant en liaison avec le matériau isolant (8, 9, 10) en y étant en appui ferme et direct.

2. Banc d'essai à rouleaux selon la revendication 1, **caractérisé en ce que** la première couche isolante (8, 9) est disposée sur le côté extérieur respectif (15) du corps de rouleau (4).

3. Banc d'essai à rouleaux selon la revendication 1 ou 2, **caractérisé en ce que** la couche isolante (8, 9) est reliée au côté extérieur (15) du corps de rouleau (4) en y étant en appui ferme et direct.

4. Banc d'essai à rouleaux selon l'une au moins des revendications 1 à 3, **caractérisé en ce qu'**il est prévu deux corps de rouleau (4).

5. Banc d'essai à rouleaux selon l'une au moins des revendications 1 à 4, **caractérisé en ce qu'**il est prévu une seconde couche isolante (10) destinée à l'amortissement du son et des vibrations sur la surface intéireure (14) de la jupe de rouleau (6).

6. Banc d'essai à rouleaux selon la revendication 5, **caractérisé en ce que** la seconde couche isolante (10) est reliée à la surface intérieure (14) de la jupe de rouleau (6) en y étant en appui ferme et direct.

7. Banc d'essai à rouleaux selon l'une au moins des revendications 1 à 6, **caractérisé en ce qu'**un contre-oscillateur (16) est disposé sur la seconde couche isolante (10).

8. Banc d'essai à rouleaux selon l'une au moins des revendications 1 à 7, **caractérisé en ce qu'**un contre-oscillateur (16) est vissé sur le corps de rouleau (4) et/ou sur la jupe de rouleau (6).

9. Banc d'essai à rouleaux selon l'une au moins des revendications 7 à 8, **caractérisé en ce que** le contre-oscillateur (16) présente au moins 25 % de la masse de la paroi de support respective.

10. Banc d'essai à rouleaux selon l'une au moins des revendications 1 à 9, dans lequel les corps de rouleau (4) comprennent des barrettes de support.

11. Rouleau du banc d'essai à rouleaux selon l'une au moins des revendications 1 à 10.
